# EUROPEAN PATENT APPLICATION

(11) **EP 1 862 432 A2**
(43) Date of publication of application: **05.12.2007**
(21) Application number: 07010450.0
(22) Date of filing: 25.05.2007
(51) Int. Cl.: C01B 31/02

(54) **Method for producing carbon nanotube-containing material**

(30) Priority: 02.06.2006 JP 2006155217
(71) Applicant: Horiba, Ltd., Kyoto-city, Kyoto 601-8510 (JP)
(72) Inventor: Yasushi, Nakata, Minami-ku Kyoto-shi Kyoto 601-8510 (JP)
(74) Representative: Müller - Hoffmann & Partner

(57) **Abstract**

A solution is produced by introducing carboxymethyl cellulose (CMC) and a carbon nanotube bulk material containing a cluster of aggregated single-walled carbon nanotubes into water (H₂O). The single-walled carbon nanotubes are solubilized by CMC in the solution and separated from the cluster. The solution in which the single-walled carbon nanotubes are dispersed by using ultrasonic waves is filtered by filters 21, 22, and 23 to produce a carbon nanotube solution containing dispersed single-walled carbon nanotubes. A carbon nanotube-containing film is produced by dropping the carbon nanotube solution onto a plate and drying the carbon nanotube solution. Aggregation of single-walled carbon nanotubes is prevented by CMC, and the carbon nanotube-containing film emits fluorescence in the near-infrared range.

## Description

### BACKGROUND OF THE INVENTION

### 1. Field of the Invention

The present invention relates to a method for producing a carbon nanotube-containing material that contains single-walled carbon nanotubes and emits fluorescence in the near-infrared range.

### 2. Description of Related Art

A carbon nanotube is a substance produced in the form of a cylinder by bonding multiple six-membered rings composed of carbon atoms. Ordinary carbon nanotubes have a closed structure containing some five-membered rings, and are classified into multi-walled carbon nanotubes in the form of multi-walled cylinders composed of multiple layers of bonded carbon atoms, and single-walled carbon nanotubes in the form of single-walled cylinders. It has been known that an isolated single-walled carbon nanotube emits fluorescence in the near-infrared range, and the possibility of applications of single-walled carbon nanotubes as near-infrared light emitting materials has been noted. Examples of production of a carbon nanotube-containing material that emits fluorescence in the near-infrared range include a method in which a single-walled carbon nanotube is synthesized from the top of a pillar-like projection on a substrate, and a network of single-walled carbon nanotubes is formed in the form of a web of a spider in the air. As an easier production example, it has been known that a solution produced by dispersing single-walled carbon nanotubes one by one in a solvent also emits fluorescence in the near-infrared range.

Commercially available carbon nanotubes are in the form of a bulk composed of a cluster of aggregated single-walled carbon nanotubes, and the carbon nanotube cluster does not emit near-infrared fluorescence. Therefore, in order to produce a carbon nanotube solution that emits near-infrared fluorescence, it is necessary to produce from a carbon nanotube bulk material a solution in which individual single-walled carbon nanotubes are dispersed. Japanese Patent No. 3751016 and Japanese Patent Application Laid-Open No. 2006-64693 disclose a technique for producing a solution containing dispersed single-walled carbon nanotubes, and a technique of producing a thin film by drying solvent from the produced solution. By limiting the types of single-walled carbon nanotubes contained in the thin film, it is possible to produce near-infrared light emitting materials that emit light in a specific wavelength range.

In a conventional method, carbon nanotubes are solubilized by mixing a surface active agent such as sodium dodecyl sulfate (SDS) and a carbon nanotube bulk material in heavy water, the carbon nanotubes are dispersed in a solution by ultrasonic waves, and the solution is centrifugally separated by an ultra-centrifugal separator to obtain a supernatant solution. In the solution, the carbon nanotubes form micelle by the function of the surface active agent, and are stably dispersed. Since the multi-walled carbon nanotube and the carbon nanotube cluster have specific gravity heavier than heavy water and the single-walled carbon nanotube has specific gravity lighter than heavy water, it is possible to separate the solution containing dispersed single-walled carbon nanotubes as a supernatant by centrifugal separation. It is possible to produce a solution containing single-walled carbon nanotubes dispersed in the solvent and a thin film containing single-walled carbon nanotubes from the separated supernatant solution.

### BRIEF SUMMARY OF THE INVENTION

In the conventional method for producing a solution containing dispersed single-walled carbon nanotubes, expensive equipment, an ultra-centrifugal separator, is necessary, and further expensive heavy water is used as a solvent. Thus, there is a problem that the produced solution is expensive. Moreover, in order to perform centrifugal separation accurately while maintaining a state in which individual single-walled carbon nanotubes are dispersed, the concentration of single-walled carbon nanotubes in the solution needs to be small to a certain extent, and thus there is a problem that it is difficult to produce a solution containing a high concentration of dispersed single-walled carbon nanotubes. When producing a thin film by condensing the produced solution, the distance between the single-walled carbon nanotubes dispersed in the solution is decreased, and therefore the single-walled carbon nanotubes aggregate and form a cluster again. Even when the single-walled carbon nanotubes are dispersed in the thin film, the aggregation of single-walled carbon nanotubes in the thin film proceeds with the passage of a long time. Thus, there is a problem that it is difficult to produce a thin film that surely emits near-infrared fluorescence.

The present invention has been made with the aim of solving the above problems, and it is an object of the invention to provide a method for producing a carbon nanotube-containing material capable of producing the carbon nanotube-containing material at low costs by separating single-walled carbon nanotubes with the use of a solvent other than heavy water, without performing centrifugal separation.

Another object of the invention is to provide a method for producing a carbon nanotube-containing material that certainly emits near-infrared fluorescence even when the concentration of single-walled carbon nanotubes is high by using a solubilizing agent capable of preventing aggregation of single-walled carbon nanotubes.

A method for producing a carbon nanotube-containing material according to a first aspect is characterized by producing a solution by mixing, in a solvent, a carbon nanotube bulk material containing a cluster of aggregated single-walled carbon nanotubes and a solubilizing agent for solubilizing the single-walled carbon nanotubes in the solvent; dispersing the single-walled carbon nanotubes solubilized by the solubilizing agent and separated from the cluster in the solution; and producing a carbon nanotube solution by filtering the solution containing the dispersed single-walled carbon nanotubes with a filter.

In the first aspect, the single-walled carbon nanotubes solubilized by the solubilizing agent is dispersed in the solution, and the solution containing the dispersed single-walled carbon nanotubes is filtered by a filter, and thus it is possible to produce a carbon nanotube solution containing dispersed single-walled carbon nanotubes without using centrifugal separation. With the use of filtration, even when the concentration of the solubilizing agent is high, or even when the viscosity of the solution is high, it is possible to produce a carbon nanotube solution containing dispersed single-walled carbon nanotubes.

A method for producing a carbon nanotube-containing material according to a second aspect is characterized in that a pore diameter of the filter is a size capable of passing the single-walled carbon nanotube solubilized and separated from the cluster and preventing passage of the cluster and a multi-walled carbon nanotube.

In the second aspect, with the use of a filter having a pore diameter capable of passing a single-walled carbon nanotube and preventing the passage of a cluster of aggregated single-walled carbon nanotubes and a multi-walled carbon nanotube, it is possible to separate single-walled carbon nanotubes into the resulting carbon nanotube solution. Moreover, by appropriately selecting a pore diameter of the filter, it is possible to produce a carbon nanotube solution containing single-walled carbon nanotubes with lengths equal to or shorter than a certain length.

A method for producing a carbon nanotube-containing material according to a third aspect is characterized in that the solubilizing agent is a polymer having a property of solubilizing carbon nanotubes in a solvent.

In the third aspect, since a polymer for solubilizing carbon nanotubes is used as a solubilizing agent, a composite is made up of the single-walled carbon nanotube and polymer, and therefore the single-walled carbon nanotube is solubilized.

A method for producing a carbon nanotube-containing material according to a fourth aspect is characterized in that the solubilizing agent is carboxymethyl cellulose.

In the fourth aspect, since carboxymethyl cellulose (CMC) that is a chain-like polymer is used as the solubilizing agent, a composite is made up of the single-walled carbon nanotube and CMC, and therefore the single-walled carbon nanotube is solubilized.

A method for producing a carbon nanotube-containing material according to a fifth aspect is characterized by dropping or applying the carbon nanotube solution onto a plate; and producing a carbon nanotube-containing film by drying the carbon nanotube solution on the plate.

In the fifth aspect, by dropping or applying the produced carbon nanotube solution onto a plate and drying it, it is possible to produce a carbon nanotube-containing film containing dispersed single-walled carbon nanotubes.

A method for producing a carbon nanotube-containing material according to a sixth aspect is characterized by producing a carbon nanotube-containing powder by spraying and drying the carbon nanotube solution.

In the sixth aspect, by spraying and drying the produced carbon nanotube solution to volatilize the solvent, it is possible to produce a carbon nanotube-containing powder containing dispersed single-walled carbon nanotubes.

A method for producing a carbon nanotube-containing material according to a seventh aspect is characterized by producing a fibrous carbon nanotube-containing material by injecting the carbon nanotube solution from a pore and drying the carbon nanotube solution.

In the seventh aspect, by injecting the carbon nanotube solution from the pore to volatilize the solvent, it is possible to produce a fibrous carbon nanotube-containing material containing dispersed single-walled carbon nanotubes.

A method for producing a carbon nanotube-containing material according to an eighth aspect is characterized in that a concentration of the solubilizing agent in the solution is substantially 2 % or more by weight.

In the eighth aspect, by increasing the concentration of the solubilizing agent in the solution to be around 2 % or higher, it is possible to easily separate multiple single-walled nanotubes into the carbon nanotube solution. Moreover, since the viscosity of the carbon nanotube solution is higher, it is possible to easily increase the thickness of a carbon-nanotube containing film which is produced from the carbon nanotube solution.

In the first and second aspects, by performing filtration using a filter capable of separating single-walled carbon nanotubes from the carbon nanotube cluster and multi-walled carbon nanotubes, a carbon nanotube solution containing dispersed single-walled carbon nanotubes can be produced without using centrifugal separation. Therefore, it is not necessary to use equipment such as an expensive ultra-centrifugal separator, and it is possible to use inexpensive water as a solvent. It is thus possible to produce a carbon nanotube solution that emits near-infrared fluorescence at low costs. Moreover, by appropriately selecting a pore diameter of the filter, it is possible to control the length of the single-walled carbon nanotubes contained in the carbon nanotube solution to be equal to or shorter than a certain length. It is thus possible to prevent reaggregation of single-walled carbon nanotubes and prevent a decrease in the near-infrared fluorescence emission intensity.

In the third and fourth aspects, since a composite is made up of a polymer such as CMC and a single-walled carbon nanotube, the single-walled carbon nanotube is solubilized, and, even when the concentration of single-walled carbon nanotubes becomes higher, the polymer is not easily separated from the single-walled carbon nanotube, and it is possible to prevent the formation of a carbon nanotube cluster by the aggregation of single-walled carbon nanotubes. It is thus possible to achieve a high concentration of single-walled carbon nanotubes in a carbon nanotube-containing material.

In the fifth aspect, in the produced carbon nanotube-containing film, since the polymer such as CMC that solubilizes the single-walled carbon nanotubes prevents aggregation of single-walled carbon nanotubes, the film contains multiple single-walled carbon nanotubes in a dispersed manner. It is thus possible to produce a carbon-nanotube-containing film that certainly enables observation of near-infrared fluorescence. Therefore, the produced carbon nanotube-containing film can be used as a near-infrared light emitting material that emits near-infrared fluorescence. In particular, by producing a carbon nanotube-containing film containing single-walled carbon nanotubes with specific structure, it is possible to produce a near-infrared light emitting material that emits light in a specific wavelength range.

In the sixth aspect, the produced carbon nanotube-containing powder also contains multiple single-walled carbon nanotubes in a dispersed manner and is usable as a material that emits near-infrared fluorescence. Since the carbon nanotube-containing powder contains a high concentration of single-walled carbon nanotubes, it is possible to enhance the intensity of near-infrared fluorescence.

In the seventh aspect, the produced fibrous carbon nanotube-containing material also contains multiple single-walled carbon nanotubes in a dispersed manner, and is usable as a material that emits near-infrared fluorescence. Since the fibrous carbon nanotube-containing material contains a high concentration of single-walled carbon nanotubes, it is possible to enhance the intensity of near-infrared fluorescence.

In the eighth aspect, it is possible to separate multiple single-walled carbon nanotubes from the carbon nanotube cluster, and it is possible to easily produce a carbon nanotube-containing material containing a high concentration of single-walled carbon nanotubes. Moreover, since the viscosity of the carbon nanotube solution is higher, it is possible to easily form a carbon nanotube-containing film with an increased thickness from the carbon nanotube solution, and thus the present invention has advantageous effects, such as a further improvement of the intensity of near-infrared fluorescence.

The above and further objects and features of the invention will more fully be apparent from the following detailed description with accompanying drawings.

### BRIEF DESCRIPTION OF THE SEVERAL VIEWS OF THE DRAWINGS

FIGS. 1A to 1C are conceptual views showing a method of the present invention for producing a carbon nanotube solution containing single-walled carbon nanotubes;
FIG. 2 is a conceptual view showing a state in which single-walled carbon nanotubes are solubilized;
FIG. 3 is a conceptual view showing a state in which a carbon nanotube solution containing single-walled carbon nanotubes is produced by filtration;
FIGS. 4A to 4C are conceptual views showing a method of the present invention for producing a carbon nanotube-containing film containing single-walled carbon nanotubes from a carbon nanotube solution;
FIG. 5 is a conceptual view schematically showing the inside of the carbon nanotube-containing film; and
FIG. 6 is a characteristic view showing the result of measurement of near-infrared fluorescence emitted by the carbon nanotube-containing film.

### DETAILED DESCRIPTION OF THE INVENTION

The following description will explain in detail the present invention, based on the drawings illustrating an embodiment thereof.

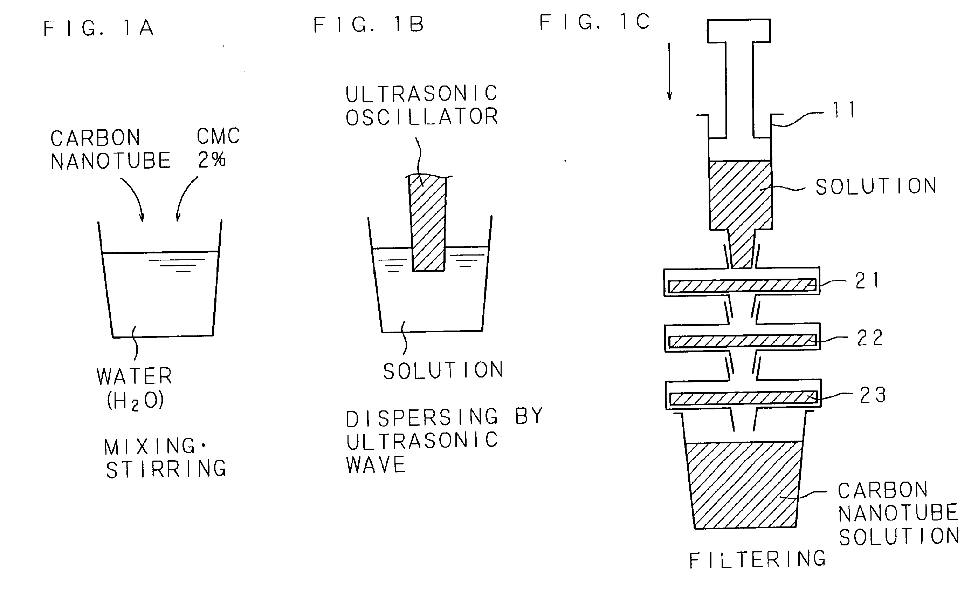

FIGS. 1A to 1C are conceptual views showing a method of the present invention for producing a carbon nanotube solution containing single-walled carbon nanotubes. First, as shown in FIG. 1A, a solution containing carbon nanotubes is produced by introducing about 2 % by weight of carboxymethyl cellulose (CMC) and a carbon nanotube bulk material composed of a cluster of aggregated single-walled carbon nanotubes into water (H₂O) as a solvent and mixing and stirring them. CMC is a chain-like polymer containing multiple hydrophilic groups and hydrophobic groups, solubilizes carbon nanotubes in water by surrounding the carbon nanotube with a plurality of hydrophobic groups, and thus functions as a solubilizing agent.

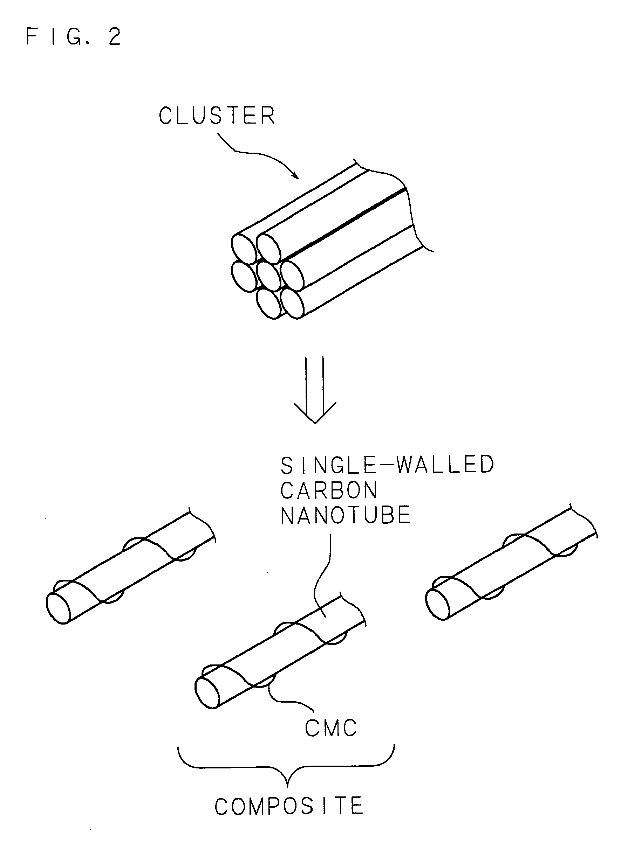

FIG. 2 is a conceptual view showing a state in which single-walled carbon nanotubes are solubilized. The hydrophobic groups in CMC are bonded to an individual single-walled carbon nanotube in the solution to surround the single-walled carbon nanotube, and a composite is formed by the CMC and single-walled carbon nanotube. At this time, the hydrophilic groups contained in CMC are oriented to the outside, and the single-walled carbon nanotubes are solubilized. Since the individual single-walled carbon nanotubes contained in the cluster are solubilized, the single-walled carbon nanotubes are separated from the cluster and dispersed in the solution.

Next, in the present invention, as shown in FIG. 1B, ultrasonic waves are applied into the solution by using an ultrasonic oscillator to disperse the single-walled carbon nanotubes in the solution. With the oscillation of ultrasonic waves, the separation of single-walled carbon nanotubes from the cluster is promoted, solubilization of single-walled carbon nanotubes is facilitated by CMC, and the single-walled carbon nanotubes are dispersed in the solution.

Next, in the present invention, as shown in FIG. 1C, an injector 11 is filled with the produced solution, the solution is pushed out of the injector 11 and passed through a plurality of filters 21, 22 and 23 sequentially to produce a carbon nanotube solution that is the solution filtered by the filters. A plurality of filters 21, 22 and 23 for filtering the solution are arranged so that the later the filtration order, the smaller the pore diameter, thereby allowing easy filtration without easily causing clogging of the filters 21, 22 and 23. The pore diameters of the filters 21, 22 and 23 as a whole are set to such sizes that allow passage of a solubilized single-walled carbon nanotube, but make it difficult for the carbon nanotube cluster or a multi-walled carbon nanotube to pass. The longer the single-walled carbon nanotube, the more difficult for the single-walled carbon nanotube to pass through the pores of the filters. Therefore, by appropriately setting the pore diameters of the filters 21, 22 and 22, it is possible to control the lengths of the single-walled carbon nanotubes contained in the carbon nanotube solution to be equal to or shorter than a certain length. The pore diameter of the filter 23 for filtering the solution last is, for example, around 0.1 µm to 0.8 µm, and may be set according to the size and length of single-walled carbon nanotubes to be dispersed in the carbon nanotube solution. Although FIG. 1C shows an embodiment using three filters 21, 22 and 23, the number of filters to be used may be other than three. It may also be possible to filter the solution with the filters by using a tool or equipment other than the injector 11.

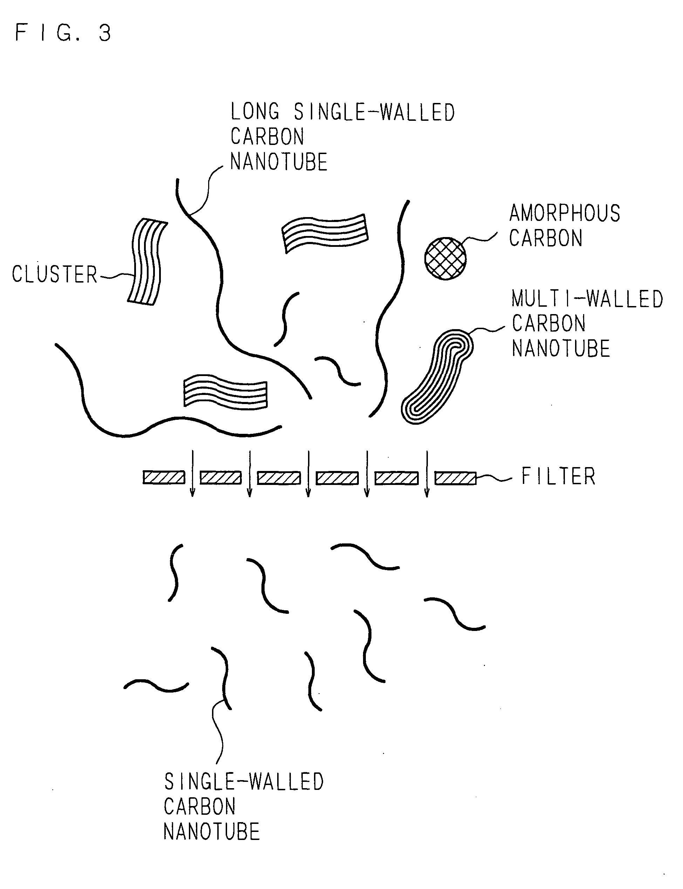

FIG. 3 is a conceptual view showing a state in which a carbon nanotube solution containing single-walled carbon nanotubes is produced by filtration. The solution obtained by mixing a carbon nanotube bulk material and CMC in water contains single-walled carbon nanotubes separated from the cluster, and a cluster of remaining aggregated single-walled carbon nanotubes. A commercially available carbon nanotube bulk material contains multi-walled carbon nanotubes and impurities such as amorphous carbons, and therefore these impurities are also contained in the solution. While individual single-walled carbon nanotubes can pass through the filters, a cluster of aggregated single-walled carbon nanotubes, multi-walled carbon nanotubes, and amorphous carbons can not pass through the filters because they have larger sizes. Moreover, long single-walled carbon nanotubes having a length equal to or longer than a predetermined length can not pass through the filters. Therefore, by filtering the solution with the filters, it is possible to produce a carbon nanotube solution containing single-walled carbon nanotubes dispersed in the solution. Long single-walled carbon nanotubes may have portions with imperfect bonding to CMC, and these portions may come closer to each other and be aggregated. Therefore, by appropriately selecting the pore diameters of the filters, it is possible to control the lengths of the single-walled carbon nanotubes contained in the carbon nanotube solution to be equal or less than a certain length, and it is possible to prevent reaggregation of single-walled carbon nanotubes when condensing the carbon nanotube solution.

Since the produced carbon nanotube solution contains dispersed single-walled carbon nanotubes, it can emit near-infrared fluorescence and can be used as a near-infrared light emitting material. For example, it can be used as an infrared luminescent paint, and a printed material using this paint is invisible to the naked eye, but can been observed by a near-infrared camera. Since centrifugal separation is not used to produce the carbon nanotube solution containing dispersed single-walled carbon nanotubes, it is not necessary to use equipment such as an expensive ultra-centrifugal separator, and it is possible to use inexpensive water as a solvent. It is thus possible to produce a necessary amount of carbon nanotube solution at low costs. Moreover, compared with a conventional technique in which the precision of centrifugal separation needs to be improved by decreasing the concentration of a solubilizing agent to a certain degree for centrifugal separation, the concentration of the single-walled carbon nanotubes in the carbon nanotube solution can be made higher by increasing the concentration of CMC as a solubilizing agent. Further, in this invention, compared with centrifugal separation that requires a long time to separate a high viscosity solution, it is possible to easily produce a carbon nanotube solution whose viscosity is increased with an increase in the concentration of CMC. In addition, since reaggregation of single-walled nanotubes in the carbon nanotube solution is prevented, it is possible to prevent a decrease in the near-infrared fluorescence emission intensity. Furthermore, continuous processing of the solution containing carbon nanotube is easier compared with the conventional technique, and it is possible to industrially produce the carbon nanotube solution containing dispersed single-walled carbon nanotubes.

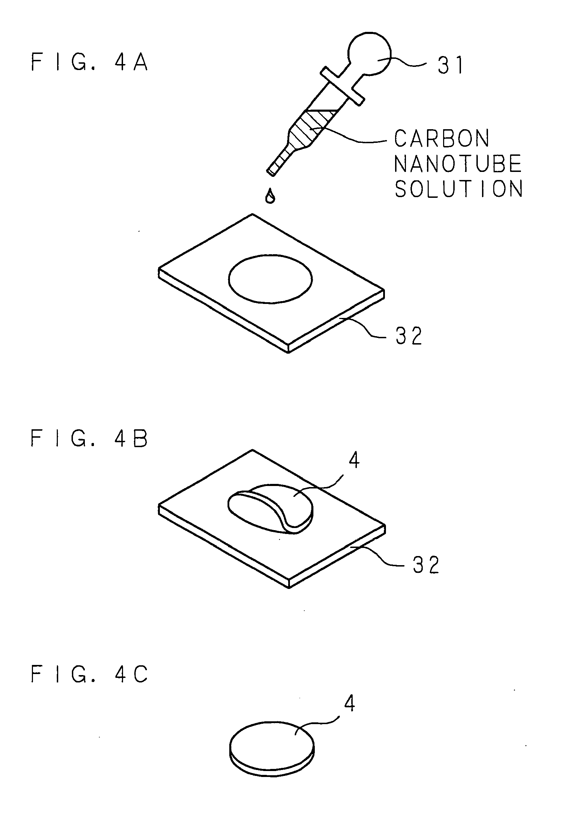

FIGS. 4A to 4C are conceptual views showing a method of the present invention for producing a carbon nanotube-containing film containing single-walled carbon nanotubes from a carbon nanotube solution. As shown in FIG. 4A, an appropriate amount of a carbon nanotube solution containing single-walled carbon nanotubes is dropped onto a substrate 32 of silicon or the like by using a pipette 31. Next, as shown in FIG. 4B, after drying the dropped carbon nanotube solution and volatilizing water contained in the carbon nanotube solution, a carbon nanotube-containing film 4 remaining on the substrate 32 is peeled off from the substrate 32. As shown in FIG. 4C, the carbon nanotube-containing film 4 according to the present invention is produced by peeling. The carbon nanotube-containing film 4 thus produced is composed almost of single-walled carbon nanotubes and CMC since water serving as a solvent was volatilized from the carbon nanotube solution. Note that it may be possible to use a spin coating method to produce a circular carbon nanotube-containing film 4 with equal thickness by rotating the substrate 32 and dropping the carbon nanotube solution onto the rotating substrate 32. It may also be possible to use a method in which the carbon nanotube solution is dropped using a tool or equipment other than the pipette 31. Alternatively, it may be possible to use a method in which a carbon nanotube-containing film 4 is produced by applying the carbon nanotube solution onto the substrate 32 instead of dropping the carbon nanotube solution onto the substrate 32.

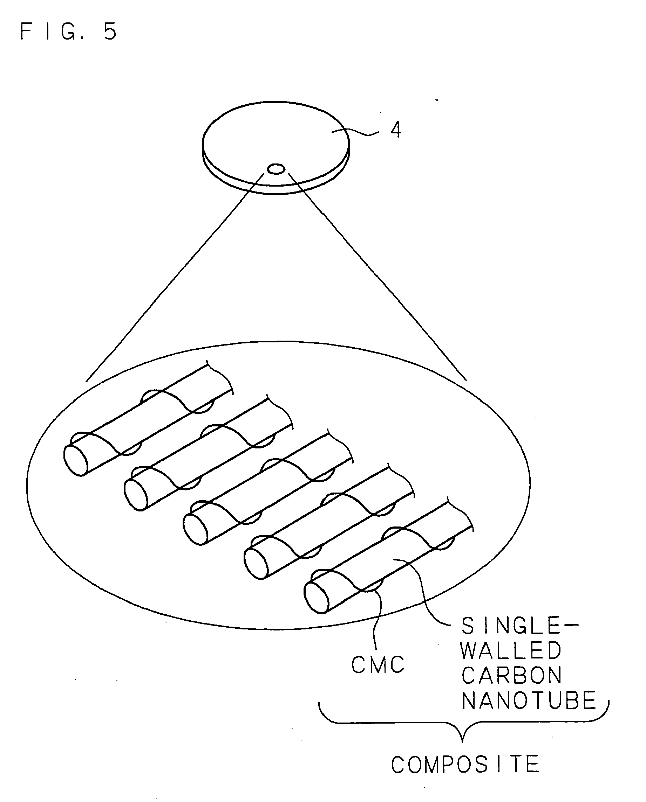

FIG. 5 is a conceptual view schematically showing the inside of the carbon nanotube-containing film 4. The carbon nanotube-containing film 4 contains composites in high density, each of which is formed by bonding chain-like CMC and a single-walled carbon nanotube. The mutually functioning area is large between the single-walled carbon nanotube and CMC constituting the composite, and thus CMC and the single-walled carbon nanotube are not easily separated from each other. Therefore, in the process of producing the carbon nanotube-containing film 4, even when water in the carbon nanotube solution is volatilized, the concentration of single-walled carbon nanotubes becomes higher and the distance between the single-walled carbon nanotubes is decreased, CMC and the single-walled carbon nanotube is not easily separated from each other. Thus, CMC constituting the composites together with the single-walled carbon nanotubes performs the function of preventing the formation of a cluster of carbon nanotubes by the aggregation of single-walled carbon nanotubes. Hence, even a carbon nanotube-containing film 4 containing single-walled carbon nanotubes in high density contains multiple single-walled carbon nanotubes which are separated from each other and do not form a cluster. Thus, since multiple single-walled carbon nanotubes are dispersed and contained in the carbon nanotube-containing film 4, the carbon nanotube-containing film 4 emits near-infrared fluorescence.

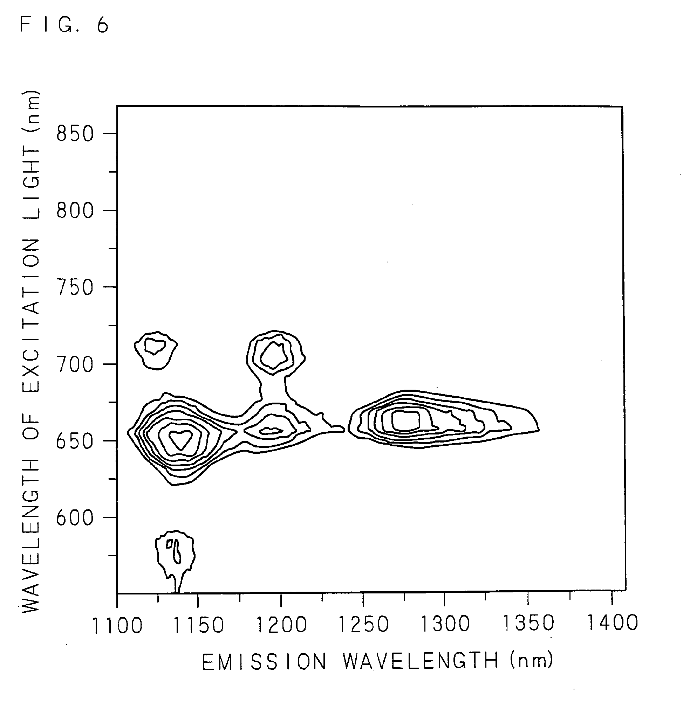

FIG. 6 is a characteristic view showing the result of measurement of near-infrared fluorescence emitted by the carbon nanotube-containing film 4. In FIG. 6, the axis of ordinates indicates the wavelength of excitation light, and the axis of abscissas indicates the near-infrared fluorescence emission wavelength. The lines in FIG. 6A are lines connecting portions of equal emission intensity. The carbon nanotube-containing film 4 emits near-infrared fluorescence of a predetermined wavelength under excitation light of a predetermined wavelength, and a maximum intensity of fluorescence that is emitted at a wavelength of around 1170 nm was observed under excitation light of a wavelength of around 650 nm. The relationship between the excitation light wavelength and the emission wavelength depends on the structure of single-walled carbon nanotubes contained in the carbon nanotube-containing film 4. By examining the relationship between the excitation light wavelength and emission wavelength, it is possible to examine the structure of single-walled carbon nanotubes contained in the carbon nanotube-containing film 4.

As described in detail above, in the present invention, by dispersing single-walled carbon nanotubes by using CMC as a solubilizing agent, CMC constituting a composite together with a single-walled carbon nanotube prevents aggregation of single-walled carbon nanotubes, and even the carbon nanotube-containing film 4 contains dispersed multiple single-walled carbon nanotubes, and thus it is possible to certainly produce the carbon nanotube-containing film 4 that emits near infrared fluorescence. Hence, the carbon nanotube-containing film 4 produced by the present invention can be used as a near-infrared light emitting material that emits near-infrared fluorescence. In particular, by producing a carbon nanotube-containing film 4 containing single-walled carbon nanotubes with adjusted structure, it is possible to produce a near-infrared light emitting material that emits light in a specific wavelength range. This carbon nanotube-containing film 4 can be used as, for example, a standard substance for near-infrared range spectral measurements, and can also be used as a light emitting element that emits near-infrared light of a specific wavelength. Note that it is of course possible to use the carbon nanotube-containing film 4 produced by the present invention as a measurement sample when examining the characteristics of single-walled carbon nanotubes by a technique other than the fluorometric analysis.

Moreover, in the present invention, even when the concentration of single-walled carbon nanotubes in the carbon nanotube-containing solution is made higher, CMC that constitutes a composite together with a single-walled carbon nanotube prevents aggregation of single-walled carbon nanotubes, and therefore it is possible to easily produce a carbon nanotube-containing film 4 with enhanced near-infrared fluorescence intensity. Further, in the present invention, by increasing the concentration of CMC to be 2 percent or so based on the solution, it is possible to separate multiple single-walled carbon nanotubes from the carbon nanotube cluster, and it is possible to easily produce a carbon nanotube solution and a carbon nanotube-containing film 4 containing a high concentration of single-walled carbon nanotubes. In addition, since the viscosity of the carbon nanotube solution becomes higher, it is possible to easily produce a carbon nanotube-containing film 4 with an increased thickness from the carbon nanotube solution, and it is possible to produce a carbon nanotube-containing film 4 with a further improved near-infrared fluorescence intensity.

In the present invention, it may be possible to use chain-like polymers such as cycloamylose, cyclodextrin, and polyvinyl alcohol as solubilizing agents as well as CMC. Even when these polymers are used as the solubilizing agents, since the polymers constitute composites together with single-walled carbon nanotubes, the single-walled carbon nanotubes are solubilized in water, and reaggregation of single-walled carbon nanotubes is prevented, and thus it is possible to produce a carbon nanotube-containing film 4 that emits near-infrared fluorescence. Since chain-like saccharides such as cycloamylose can produce a solution of a high concentration of 20 % or so, it is possible to produce a carbon nanotube solution and a carbon nanotube-containing film 4 containing a higher concentration of single-walled carbon nanotubes. Moreover, it may be possible to use a protein having a property of solubilzing single-walled carbon nanotubes, such as gelatin, as a solubilizing agent. In the present invention, although it is optimal to use water (H₂O) as a solvent, it may be possible to produce a carbon nanotube solution and a carbon nanotube-containing film 4 by using other solvent such as heavy water (D₂O).

Although this embodiment illustrates a method for producing a carbon nanotube solution and a carbon nanotube-containing film 4 containing dispersed single-walled carbon nanotubes, it may also be possible to produce a carbon nanotube-containing powder containing single-walled carbon nanotubes by spraying and drying the carbon nanotube solution with a spray dryer. The carbon nanotube-containing powder thus produced also contains dispersed multiple single-walled carbon nanotubes that constitute composites together with polymers such as CMC, and it can be used as a material that emits near-infrared fluorescence. Since water can be efficiently volatilized by spraying and drying, the carbon nanotube-containing powder contains a high concentration of single-walled carbon nanotubes, and thus it is possible to enhance the intensity of near-infrared fluorescence. Further, by solidifying the carbon nanotube-containing powder in the form of pellets, it can be used as a light emitting element that emits near-infrared light with high brightness.

Additionally, in the present invention, it may be possible to produce a fibrous carbon nanotube-containing material containing single-walled carbon nanotubes by injecting a carbon nanotube solution containing dispersed single-walled carbon nanotubes from pores and drying it. Since the fibrous carbon nanotube-containing material thus produced contains dispersed multiple single-walled carbon nanotubes that constitute composites together with a polymeric solubilizing agent such as CMC, it can be used as a material that emits near-infrared fluorescence. Since water can be efficiently volatilized, the fibrous carbon nanotube-containing material contains a high concentration of single-walled carbon nanotubes, and thus it is possible to enhance the intensity of near-infrared fluorescence.

## Claims

1. A method for producing a carbon nanotube-containing material that contains single-walled carbon nanotubes and emits near-infrared fluorescence, **characterized by** comprising the steps of:
producing a solution by mixing, in a solvent, a carbon nanotube bulk material containing a cluster of aggregated single-walled carbon nanotubes, and a solubilizing agent for solubilizing the single-walled carbon nanotubes in the solvent;
dispersing the single-walled carbon nanotubes solubilized by the solubilizing agent and separated from the cluster in the solution; and
producing a carbon nanotube solution by filtering the solution containing the dispersed single-walled carbon nanotubes with a filter (21, 22, 23).

2. The method for producing a carbon nanotube-containing material according to claim 1, wherein a pore diameter of the filter (21, 22, 23) is a size capable of passing the single-walled carbon nanotube solubilized and separated from the cluster and preventing passage of the cluster and a multi-walled carbon nanotube.

3. The method for producing a carbon nanotube-containing material according to claim 1 or 2, wherein the solubilizing agent is a polymer having a property of solubilizing carbon nanotubes in a solvent.

4. The method for producing a carbon nanotube-containing material according to claim 1 or 2, wherein the solubilizing agent is carboxymethyl cellulose.

5. The method for producing a carbon nanotube-containing material according to claim 3 or 4, further comprising the steps of:
dropping or applying the carbon nanotube solution onto a plate (32); and
producing a carbon nanotube-containing film by drying the carbon nanotube solution on the plate (32).

6. The method for producing a carbon nanotube-containing material according to claim 3 or 4, further comprising the step of producing a carbon nanotube-containing powder by spraying and drying the carbon nanotube solution.

7. The method for producing a carbon nanotube-containing material according to claim 3 or 4, further comprising the step of producing a fibrous carbon nanotube-containing material by injecting the carbon nanotube solution from a pore and drying the carbon nanotube solution.

8. The method for producing a carbon nanotube-containing material according to any one of claims 1 to 7, wherein a concentration of the solubilizing agent in the solution is substantially 2 % or more by weight.
